# EUROPÄISCHE PATENTANMELDUNG

(11) **EP 1 510 398 A2**
(43) Veröffentlichungstag der Anmeldung: **02.03.2005**
(21) Anmeldenummer: 04020025.5
(22) Anmeldetag: 24.08.2004
(51) Int. Cl.: B60P 1/02

(54) **Hubbodenvorrichtung**

(30) Priorität: 27.08.2003 DE 10339359
(71) Anmelder: MKG Metall- und Kunststoffverarbeitungsges. m.b.H., 49504 Lotte (DE)
(72) Erfinder: Titgemeyer, Gerd- Christian, 49084 Osnabrück (DE)
(74) Vertreter: Pott, Ulrich, Dipl.-Ing.

(57) **Zusammenfassung**

Eine Hubbodenvorrichtung für einen Laderaum (2) eines Fahrzeuges mit einer Trageinheit und einem an der Trageinheit angeordneten, höhenverstellbaren Hubboden (6), welcher ein Traggerüst aufweist und den Laderaum (2) in zumindest teilweise übereinander befindliche Ladebereiche (3, 4) unterteilt, wird so ausgebildet, daß das Traggerüst aus variabel miteinander verbindbaren Tragelementen (16) modular aufgebaut ist.

## Beschreibung

Die Erfindung betrifft eine Hubbodenvorrichtung für einen Laderaum eines Fahrzeuges mit einer Trageinheit und einem an der Trageinheit angeordneten, höhenverstellbaren Hubboden, welcher ein Traggerüst aufweist und den Laderaum in zumindest teilweise übereinander befindliche Ladebereiche unterteilt.

Aus der DE 27 34 943 A1 ist ein Hubboden bekannt, der mit Hilfe einer Trageinheit höhenverstellbar innerhalb eines Kastenaufbaus vorgesehen ist. Der Hubboden besitzt hierbei ein Traggerüst, welches wenigstens vier an den Rändern befindliche Stützpunkte ausbildet und über die Seile laufen, an denen der Hubboden aufgehängt ist. Der Rahmen, bzw. das Traggerüst des Hubbodens besteht aus zwei mittleren Längsstreben, einem Rahmen und zwischen Rahmen und Längsstreben angeordneten Querstreben zur Versteifung des Traggerüstes. Mittels eines zwischen den beiden Längstreben angeordneten Hubzylinders wird die Höhe des an Seilen befestigten, über Aufhängungspunkte geführten Zwischenbodens variiert.

Der Stand der Technik besitzt eine Reihe von Nachteilen. Der in der DE 27 34 943 beschriebene Hubboden läßt sich nur bei Fahrzeugen mit Kofferaufbauten realisieren. Da weiterhin genau eine Art der Aufhängung des Zwischenbodens vorgesehen ist, wird der Einsatzbereich desselben eingeschränkt. Schließlich ist auch das Traggerüst des Hubbodens speziell und ausschließlich für die in der DE-Offenlegungsschrift beschriebene Vorrichtung ausgebildet.

Der Erfindung liegt die Aufgabe zugrunde, die soeben beschriebenen Nachteile zu vermeiden und insbesondere einen Hubboden zu schaffen, der flexibel für verschiedene Fahrzeugtypen einsetzbar ist.

Gelöst wird diese Aufgabe durch eine Hubbodenvorrichtung gemäß Anspruch 1. Die erfindungsgemäße Hubbodenvorrichtung für den Laderaum eines Fahrzeuges weist eine Trageinheit und einen an dieser Trageinheit angeordneten, höhenverstellbaren Hubboden auf, der mit einem Traggerüst ausgebildet ist und den Laderaum in zumindest teilweise übereinander befindliche Ladebereiche unterteilt. Dabei ist das Traggerüst aus variabel miteinander verbindbaren Tragelementen modular aufgebaut. Die mit einem solchen Traggerüst versehene Hubbodenvorrichtung läßt sich je nach Größe und Geometrie des Laderaums passend in diesen einbauen. Die einzelnen Tragelemente des Traggerüstes können bevorratet werden, so daß verschiedene Hubböden schnell realisiert werden können. Weiterhin ist es möglich, die einzelnen Tragelemente des Traggerüstes mit einer Montageanleitung zu versehen und zum Abnehmer zu schicken, um dort die Montage vornehmen zu lassen. Dieses macht die erfindungsgemäße Hubbodenvorrichtung günstiger und ihre Handhabung flexibler.

Vorteilhafterweise ist zumindest ein Tragelement des Traggerüstes mit einer Mehrzahl von Befestigungsbereichen zur möglichen Aufnahme von weiteren Tragelementen versehen. Diese Befestigungsbereiche können auf verschiedene Art und Weise ausgebildet sein. So ist es denkbar, daß lediglich Markierungen zum Anbringen von beispielsweise Bohrungen oder Schweißnähten an dem Tragelement angebracht sind. Es kann sich hierbei um Stege oder andere Auflager für die weiteren Tragelemente handeln. Je nach beabsichtigter Gesamttraglast des Hubbodens werden für das Traggerüst verschieden viele oder verschieden stabil ausgebildete Tragelemente verwendet. Durch die unterschiedlichen Möglichkeiten, die eine definierte Tragkraft aufweisenden Tragelemente miteinander zu kombinieren und aneinander zu befestigen, lassen sich sowohl verschiedene Geometrien eines Traggerüstes als auch unterschiedliche Gesamttraglasten realisieren.

Der Hubboden selbst kann in seinem Bodenbereich sowohl zumindest eine auf dem Traggerüst aufgelegte und/oder befestigte Bodenplatten aufweisen. Es ist aber auch denkbar, daß mehrere Bodenplatten oder Bodenbereichselemente wie beispielsweise Gitterroste nur teilweise auf den Tragelementen aufliegen und daher Teile der Tragelemente selbst einen Bodenbereich des Hubbodens ausbilden. Somit werden Material und Kosten gespart. Erfindungsgemäß kann der Bodenbereich des Hubbodens eine rutschvermindernde Oberfläche mit beispielsweise einer Profilierung oder auch einem Gitterrost aufweisen.

Weiterhin ist von Vorteil, wenn die Tragelemente zumindest teilweise als Strangpreßprofile aus Aluminium bzw. einer Aluminiumlegierung bestehen. Die dadurch möglichen vielfältigen Formen von Tragelementen vergrößern die Flexibilität des Traggerüstes und somit der Ausbildung der gesamten Hubbodenvorrichtung. So kann z. B. nur ein als zentraler Längsträger ausgebildetes Profil vorgehalten werden und je nach Auftrag an die Laderaumlänge durch Ablängen angepaßt werden. Bei gegebener Breite lassen sich an diesem zentralen Längsstück Kopfstücke und seitlich angeordnete Mittelaufleger anbringen, um so das Traggerüst für den Hubboden auszubilden. Neben den verschiedenen Formen, die bei Alustrangpreßprofilen möglich sind, zeichnet sich ein aus solchen Elementen hergestelltes Traggerüst auch durch seine hervorragenden Oberflächeneigenschaften aus. In Verbindung mit teilweise oder komplett aus Stahl bestehenden Tragelementen läßt sich die Steifigkeit des Traggerüstes einer erfindungsgemäßen Hubbodenvorrichtung weiter erhöhen. Denkbar ist auch der Einsatz von weiteren Metallen oder auch Holz zur Herstellung der Elemente des Traggerüsts.

Um die erfindungsgemäße Hubbodenvorrichtung nicht nur in Kofferaufbauten mit festen Seitenwänden sondern auch auf Pritschenaufbauten zu verwenden, können an den Seiten des Laderaumes zumindest zwei in etwa vertikal zum Boden stehende Tragsäulen vorgesehen sein. Diese sind mit verschiedenen Sicherungen ggf. lösbar mit dem Chassis oder der Bodenfläche des Laderaumes verbunden und sorgen dafür, daß die Gewichtskräfte des Hubbodens in das Chassis des Fahrzeugs übertragen werden. Zweckmäßigerweise wird der Hubboden, der mit weiter unten näher beschriebenen Mitteln gehoben oder gesenkt werden kann, durch Mittel zur Arretierung an den Tragsäulen gesichert. Die Tragsäulen gehören mit den übrigen Elementen, die den Hubboden tragen, also z. B. Seile oder Teile von Antriebseinheiten, zur Trageinheit der Hubbodenvorrichtung. Die Teile der Trageinheit können auch am Hubboden selbst angeordnet sein.

Es versteht sich, daß die Mittel zur Arretierung, beispielsweise einfache Bolzen oder von Hubzylindern ausfahrbare Profile, die in entsprechende Bereiche der Tragsäule eingreifen können, unterschiedlich ausgebildet sein können. Neben den in diskreten Höhen manuell oder automatisch betätigbaren Mitteln zur Arretierung sind auch klammernde oder andere stufenlos verstellbare Arretierungsmittel möglich.

Durch die vorgenannten und folgenden Ausgestaltungen der Erfindung können beliebige Fahrzeuge mit einem Koffer- oder Pritschenaufbau mit einem Hubboden versehen werden. Es ist aber auch möglich, die Hubbodenvorrichtung unabhängig von einem Fahrzeug ortsfest zu installieren.

Weitere Vorteile der Erfindung ergeben sich aus den übrigen Unteransprüchen sowie den nachfolgend beschriebenen schematischen Darstellungen der Erfindung in den Zeichnungen. Es zeigt:
- Fig. 1: ein Fahrzeug mit einem Ausführungsbeispiel einer erfindungsgemäßen Hubbodenvorrichtung,
- Fig. 2: ein Hubboden einer weiteren erfindungsgemäßen Hubbodenvorrichtung in einer Unterbodenansicht und
- Fig. 3 bis 9: verschiedene weitere Ausführungsbeispiele der Erfindung jeweils in perspektivischer Darstellung.

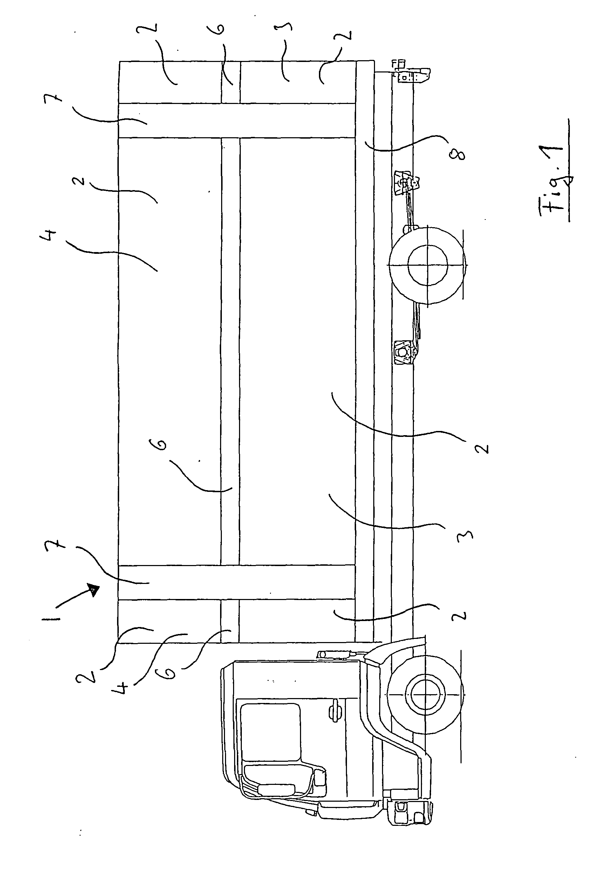

Eine erfindungsgemäße Hubbodenvorrichtung 1 ist in Fig. 1 in einem Laderaum 2 eines nicht näher bezifferten Kofferfahrzeugs integriert und unterteilt diesen in zwei übereinander befindliche Ladebereiche 3 und 4. Ein zwischen diesen beiden Ladebereichen 3 und 4 befindlicher Hubboden 6 ist an Tragsäulen 7 angebracht, die wiederum in einem Bodenbereich 8 des Laderaumes 2 festgelegt sind. Um die Gewichtskräfte des Hubbodens 6 direkt in das Chassis des Fahrzeugs zu leiten, können die Tragsäulen 7 auch direkt mit diesem verbunden werden. Handelt es sich bei dem Fahrzeug nicht um ein Kofferfahrzeug sondern um ein Pritschenfahrzeug, so kann der erfindungsgemäße Hubboden 6 sinnvollerweise mit einem Geländer versehen werden, das ein Herunterfallen des transportierten Materials verhindert.

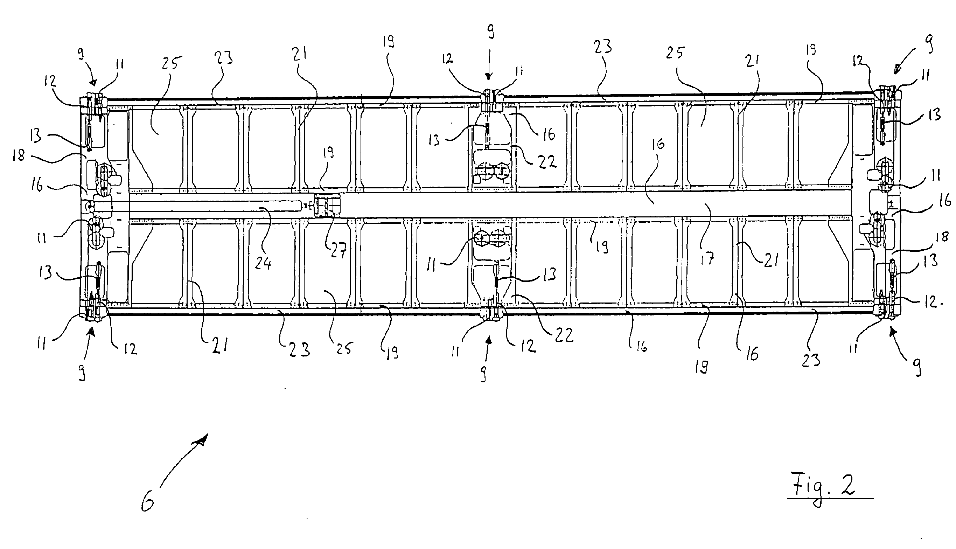

Anstatt wie in Fig. 1 dargestellt, auf jeder Seite an zwei Aufhängungs- oder Stützpunkten an den Tragsäulen 7 festgelegt zu sein, gibt es bei der in Fig. 2 dargestellten Ausführungsform eines erfindungsgemäßen Hubbodens 6 insgesamt sechs Bereiche 9, in denen der Hubboden 6 mittelbar durch Seile, Ketten oder ähnliche Zugkraft übertragene Elemente oder ggf. wie dargestellt auch zusätzlich unmittelbar durch Mittel zur Arretierung des Hubbodens 6 an den Tragsäulen 7 festgelegt ist. Zum einen weisen die Bereiche 9 Umlenkrollen 11 auf, die am Rand des Hubbodens 6 angeordnet sind und über die beispielsweise an den Tragsäulen 7 befestigte Seile laufen. Zum anderen handelt es sich um stabähnliche Profile 12, die von Hubzylindern 13 zur Arretierung des Hubbodens 6 an den Tragsäulen 7 in hierfür vorgesehene Tragaufnahmen 14 der Tragsäulen eingebracht werden können. Aufgrund der Arretierung des Hubbodens 6 an den Tragsäulen 7 wird die gesamte Hubbodenvorrichtung 1 stabilisiert.

Der in Fig. 2 dargestellte Hubboden 6 beinhaltet ein Traggerüst, das aus variabel miteinander verbindbaren Tragelementen 16 modular aufgebaut ist. Ein zentraler Längsträger 17 ist an seinen Enden mit jeweils einem gleichen Kopfteil 18 verbunden, wobei die beiden Kopfteile 18 zusammen mit dem Längsträger 17 die Längserstreckung des Traggerüsts vorgeben. Zur Veränderung der Länge des Traggerüstes kann der Längsträger 17 durch Ablängen in seiner Länge variiert werden. An den Seiten des Längsträgers 17 sind über in etwa die gesamte Länge aufeinander folgend Befestigungsbereiche ausgebildet, an denen sowohl die als Kopfteile 18 ausgebildeten Querträger als auch eine Vielzahl weiter unten beschriebener weiterer Querträger festgelegt werden können.

Aussehen und Form der Befestigungsbereiche sind je nach bevorzugter Ausbildung des Traggerüstes, bzw. der Hubbodenvorrichtung 1, unterschiedlich. So ist es denkbar, daß die Befestigungsbereiche lediglich an den Seiten des zentralen Längsträgers 17 markierte Bereiche darstellen, an denen z. B. Schweißnähte angebracht oder durch die Bohrungen für Verschraubungen geführt werden sollen.

Bei den Befestigungsbereichen des hier dargestellten erfindungsgemäßen Traggerüsts handelt es sich um auf beiden Seiten des Längsträgers 17 sich jeweils über dessen gesamte Länge erstreckende Befestigungszonen in Form von je zwei parallel zueinander von dem Grundkörper des Trägers 17 abstehenden Stegen 19. Neben den ebenfalls an diesen Befestigungszonen angelegten Kopfteilen 18 sind beidseitig als Querträger ausgebildete Tragelemente 16 an dem Längsträger 17 befestigt. Während eine Vielzahl von einfachen Querträgern 21 seitlich am Längsträger 17 angeordnet ist, was der Stabilität des Traggerüsts dient, weisen die Seitenteile 22 Bereiche zur Anbringung von Umlenkrollen 11, weiteren Seil- oder Kettenführungselementen oder von Mitteln zur Arretierung des Hubbodens 6 an den Tragsäulen 7 auf.

Die soeben beschriebenen Querträger 21 und das Seitenteil 22 sind an ihrem einen Ende am zentralen Längsträger 17 und an ihrem gegenüberliegenden Ende an mehreren als Rahmenteile 23 ausgebildeten Längsträgern festgelegt. Diese Rahmenteile 23 weisen ebenfalls auf zumindest einer Seite eine Befestigungszone in Form von zumindest einem Steg 19 auf, mit dem die entsprechenden Befestigungsbereiche der Querträger mit Hilfe von Niet-, Kleb-, Schraub- oder anderen Verbindungen verbunden sind. Die Stege 19 des zentralen Längsträgers 17 und der Rahmenteile 23 können identische Maße besitzen, es ist aber auch möglich, diese Befestigungsbereiche unterschiedlich auszubilden. Der Vorteil von identischen Maßen liegt hierbei in der Gleichförmigkeit der endseitig an den einfachen Querträgern 21 befindlichen komplementären Befestigungsbereiche.

Während die Längserstreckung des gesamten Hubbodens 6 bei diesem Ausführungsbeispiel durch Ablängen der Längsträger 17 und 23 variiert werden kann, können für die Änderung der Breite des Hubbodens 6 verschieden lange Querträger 18, 21 und/oder 22 Verwendung finden. Mit den verschiedenen Elementen des erfindungsgemäßen Traggerüstes ist es demzufolge möglich, einen Hubbodenbausatz zu bevorraten, der an die verschiedenen Abmessungen der Laderäume 2 der unterschiedlichen Fahrzeuge anpaßbar ist. So können beispielsweise bei einem kürzeren Laderaum 2 die Rahmenteile 23 unter Weglassen der Seitenteile 22 direkt die Kopfteile 18 verbinden.

Vorteilhafterweise ist die erfindungsgemäße Hubbodenvorrichtung 1 mit zumindest einer Bodenplatte versehen, die das gesamte Traggerüst abdeckt. Statt einer einzelnen Bodenplatte können aber zur Erhöhung der Flexibilität der Hubbodenvorrichtung 1 die Zwischenräume, die vom Traggerüst gebildet werden, mit mehreren kleineren Bodenplatten 25 abgedeckt werden. Diese schließen sich z. B. formschlüssig an eine begehbare Oberseite des zentralen Längsträgers 17 an und werden von den Kopfteilen 18, den Seitenteilen 22 und/oder den Rahmenteilen 23 randseitig begrenzt. In diesem Fall weisen die einfachen Querträger 21 eine geringere Höhe als die übrigen Tragelemente 16 auf. Statt einfacher Bodenplatten 25 sind natürlich auch Roste oder andere Abdeckungen denkbar.

Zur Durchführung einer Hubbewegung des Hubbodens 6 ist es von Vorteil, wenn zumindest Teile der zur Durchführung der Hubbewegung notwendigen Antriebseinheit an dem Hubboden 6 selbst angeordnet sind. So weist der in Fig. 2 dargestellte Hubboden 6 in seinem in diesem Fall hohl ausgebildeten Längsträger 17 einen Hubzylinder 24 auf, der mit einem in Längsrichtung des Trägers 17 und in diesem geführten Seilführungsschlitten 27 versehen ist. Da der Längsträger 17 durch Ablängen längenvariierbar ausgeführt ist, ist der Hubzylinder 24 in dem Kopfteil 18 festgelegt. Hierdurch wird gleichzeitig der zur Verfügung stehende Raum zur Durchführung der Hubbewegung im Längsträger 17 maximiert. Je nach Ausführungsform der Erfindung zieht der Hubzylinder 24 bei seiner Ein- oder Ausfahrbewegung an den am Seilführungsschlitten 27 befestigten Zugkraft übertragenden Elementen, woraufhin sich der Hubboden 6 anhebt. Der Seilführungsschlitten 27 sorgt für eine gleichmäßige Belastung der Kolbenstange des Hubzylinders 24, da an den jeweiligen Seilen, Ketten oder ähnlichen Zugkraft übertragenden Elementen, die über verschiedene Umlenkrollen 11 an den Tragsäulen 7 befestigt sind, je nach Belastung des Hubbodens 6 sehr unterschiedliche Kräfte auftreten können.

Für die Druckbeaufschlagung des Hubzylinders 24 notwendige Mittel wie beispielsweise eine Pumpe und ein Tank zur Bevorratung des Hubzylindermediums sowie ein Energiespeicher zum Betrieb der Pumpe sind in Fig. 2 nicht dargestellt, können aber beispielsweise in dem Kopfteil 18 oder auch zwischen verschiedenen Tragelementen 16 angebracht sein. In einem solchen Fall ist die gesamte Hubbodenvorrichtung 1 unabhängig von der Energieversorgung des betreffenden Fahrzeugs und kann beispielsweise statt in dem Laderaum 2 eines Fahrzeugs auch unabhängig von diesem ortsfest aufgestellt werden.

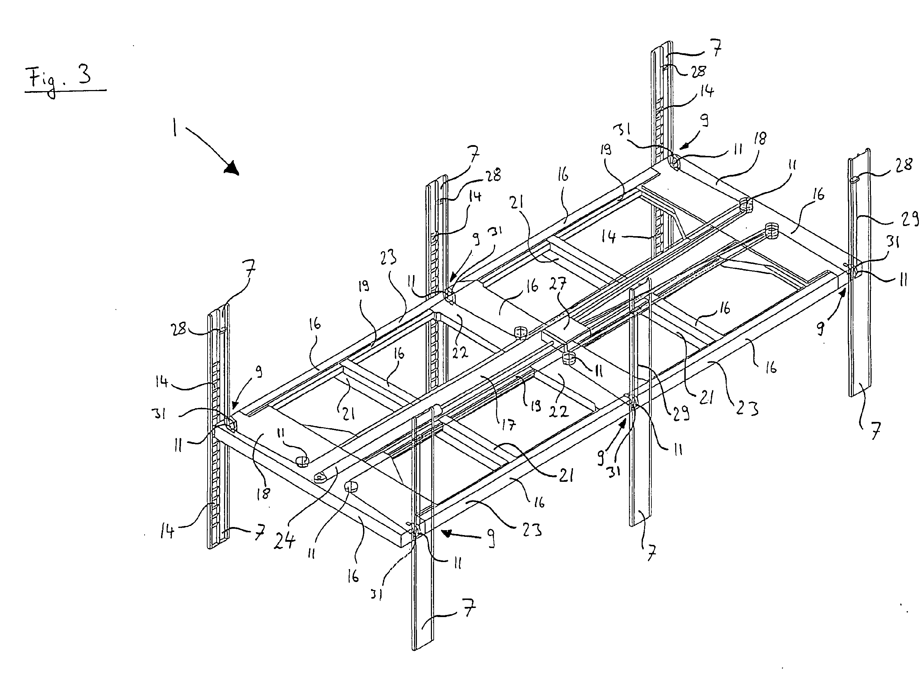

Bei einem weiteren Ausführungsbeispiel der Erfindung ist in Fig. 3 das Traggerüst des Hubbodens 6 geringfügig anders ausgebildet, unter anderem mit weniger Querträgern. Weiterhin sind in dieser schematischen Darstellung die einzelnen Tragelemente 16 unterschiedlich geformt. An den Tragsäulen 7 sind in deren oberen Bereichen Trageinheitsbefestigungen 28 angebracht, an denen jeweils ein Tragteil 29 festgelegt ist, welches mit als Traggerüstbefestigungen 31 ausgebildeten und in den Bereichen 9 befindlichen Umlenkrollen 11 verbunden ist. Bei diesem Ausführungsbeispiel sind die Tragteile 29 als einfache Seile ausgebildet. Wenn der Hubzylinder 24 einfährt und so an den am Seilführungsschlitten 27 befestigten Tragteilen 29 zieht, wird der Hubboden 6 angehoben. Auf diese Art und Weise ist eine gleichförmige Variierung der durch die Tragteile 29 zwischen den Traggerüstbefestigungen 31 und Trageinheitsbefestigungen 28 definierten Weglänge der Seile möglich. Der Hubboden 6 wird parallel zum Untergrund angehoben und kann in diskreten Höhen mit Hilfe der an den oben beschriebenen Hubzylindern 13 angebrachten Profile 12 in den Tragaufnahmen 14 festgelegt werden.

In Fig. 3 sind die Tragsäulen 7 Doppel-U-förmige Schienen, in denen das Tragteil 29, respektive ein Seil oder eine Kette, geführt ist, solange es sich nicht im Bereich des Traggerüstes befindet. Diese Führung bietet Schutz vor Verletzungen durch die möglicherweise unter Spannung stehenden Tragteile 29.

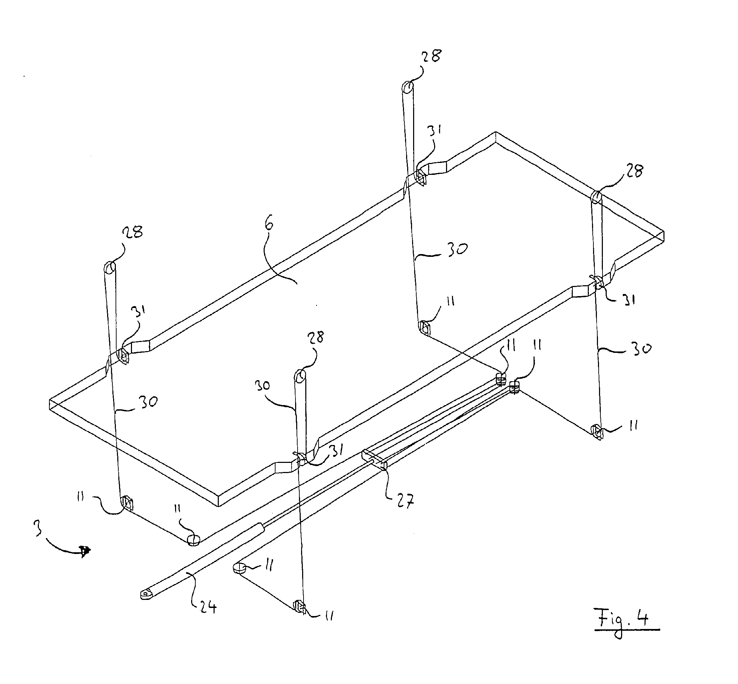

In den Fig. 4 bis 9 sind weitere Ausführungsbeispiele der erfindungsgemäßen Hubbodenvorrichtung 1 vereinfacht dargestellt. Allen diesen Figuren ist gemein, daß lediglich der Hubboden 6 mit der für die Durchführung der Hubbewegung verantwortlichen Antriebseinheit sowie Teilen der Trageinheit dargestellt ist.

Die erfindungsgemäße Hubbodenvorrichtung 1 nach Fig. 4 weist einen im Bodenbereich des unteren Ladebereiches 3 befindlichen Hubzylinder 24 zur Durchführung der Hubbewegung auf. An der Kolbenstange des Hubzylinders 24 ist wiederum ein Seilführungsschlitten 27 befestigt, an dem als Seile 30 ausgebildete Tragteile angebracht sind, die über Umlenkrollen 11 zu ebenfalls als Umlenkrollen ausgebildeten Trageinheitsbefestigungen 28 an nicht weiter dargestellten Tragsäulen geführt werden. Von dort werden die Seile 30 zu Traggerüstbefestigungen 31 geführt. Diese weisen eine Form auf, die es erlaubt, die Seile 30 in den nicht dargestellten U-förmigen Bereichen der in Fig. 3 dargestellten Tragsäulen 7 zu führen. Ohne einen direkt am Hubboden 6 angeordneten Hubzylinder ist dieser Hubboden 6 leichter als die in den Figuren 2 und 3 dargestellten Ausführungsbeispiele.

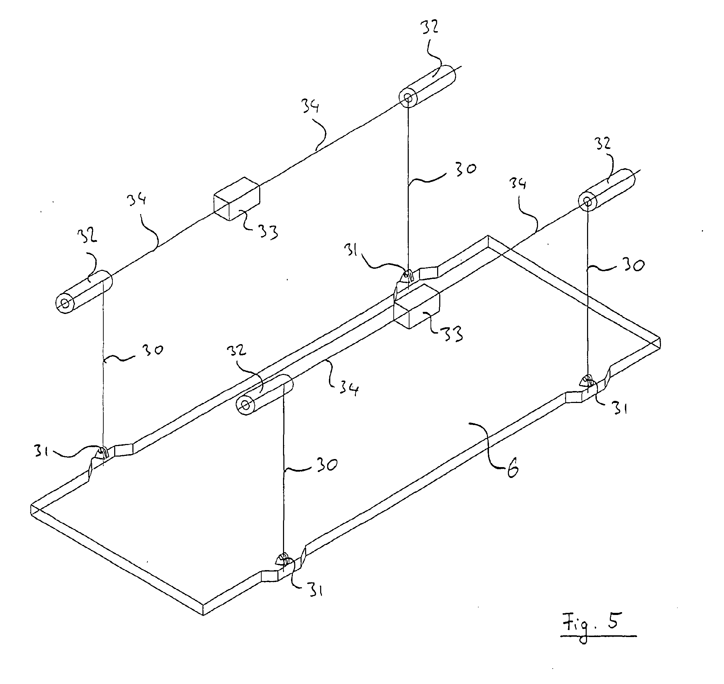

Eine weitere vorteilhafte Ausführungsform der Hubbodenvorrichtung 1 gemäß der Erfindung ist in Fig. 5 dargestellt. Bei dieser Ausführungsform wird der Hubboden 6 mit Hilfe von an den oberen Enden der nicht dargestellten Tragsäulen befindlichen Seilwinden 32, die jeweils zu zweit über mit einem Motor 33 verbundene Achsen 43 angetrieben werden, in die Höhe gezogen. Die Seilwinden 32 fungieren in diesem Fall als Trageinheitsbefestigungen 28. Der Vorteil dieser Ausführung liegt in der vereinfachten Seilführung. So sind die Seile 30 in einfacher Weise an den Traggerüstbefestigungspunkten 31 festgelegt. Genauso wie in Fig. 4 und den nachfolgenden Figuren ist hier das Traggerüst, welches den Hubboden 6 stützt und stabilisiert, nicht näher dargestellt.

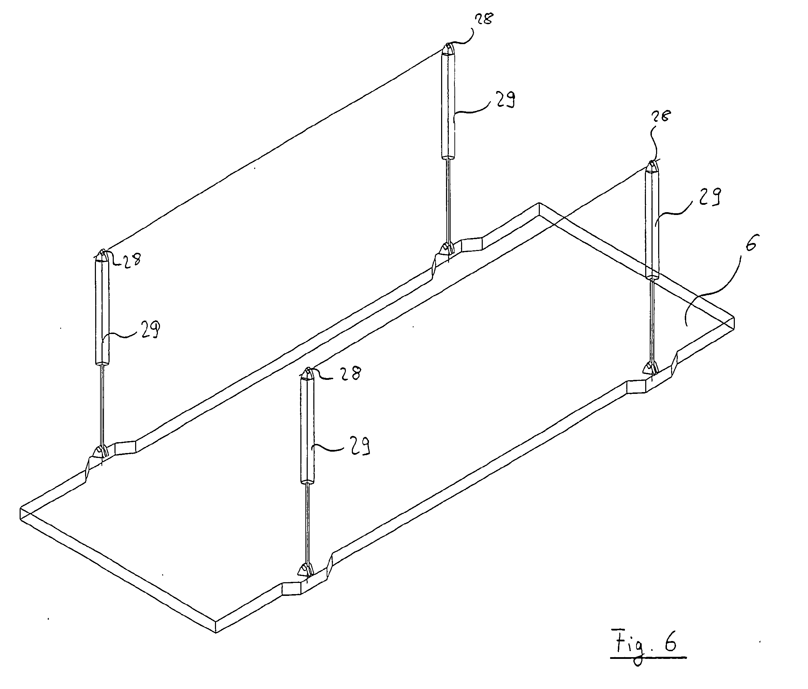

Statt eines Seils oder einer Kette ist es auch denkbar, das Tragteil 29 als Hubzylinder auszubilden (Fig. 6), der dann Trageinheitsbefestigungen 28 und Traggerüstbefestigungen 31 miteinander verbindet. Dieses führt zu dem Vorteil, daß ähnlich wie bei dem in Fig. 5 dargestellten Ausführungsbeispiel bei unterschiedlicher Ansteuerung der jeweils auf einer Seite befindlichen Tragteile 29 ein schräger Hubboden 6 realisiert werden kann. Auch ist es mit dem in Fig. 6 dargestellten erfindungsgemäßen Hubboden 6 möglich, mit Hilfe von ausfahrenden Zylindern, respektive Tragteilen 29, Druck auf den unteren Ladebereich 3 auszuüben und somit Ladegut zu fixieren.

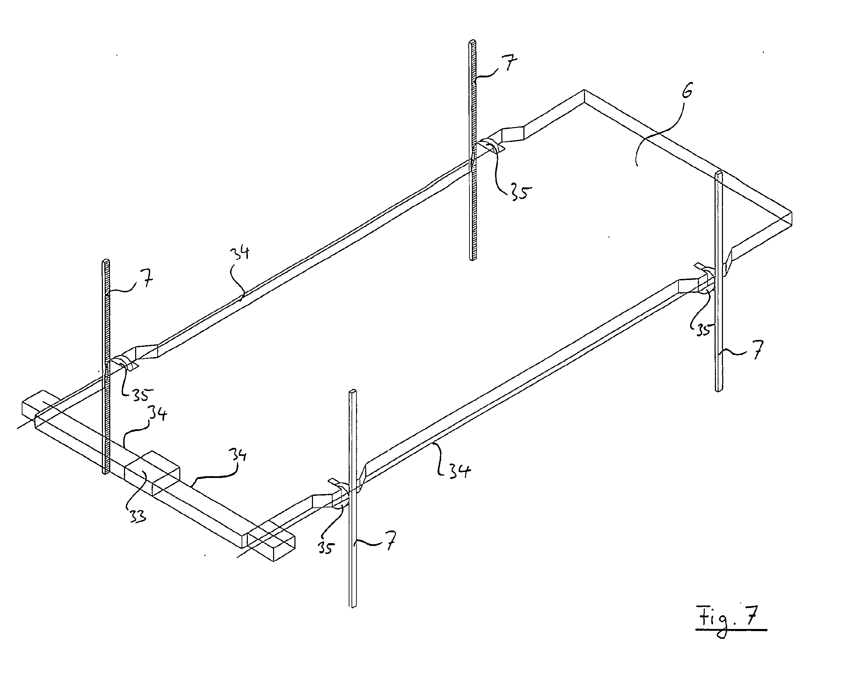

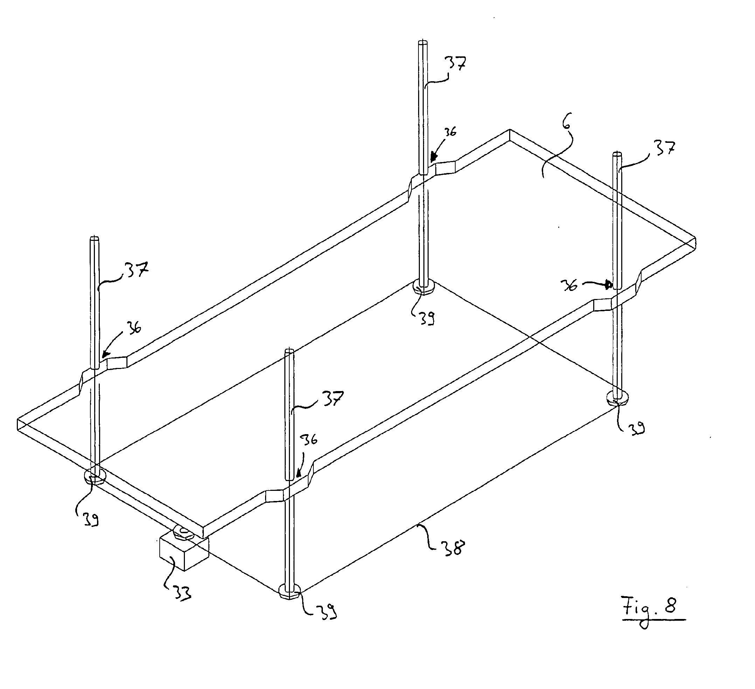

Die in Fig. 7 dargestellte erfindungsgemäße Hubbodenvorrichtung 1 weist einen Hubboden 6 auf, der an als Zahnstangen ausgebildeten Tragsäulen 7 entlang nach oben oder nach unten bewegt werden kann. Die Höhenverstellung wird hierbei mit Hilfe von an den Seiten des Hubbodens 6 angeordneten und durch von einem Motor 33 angetriebene Achsen 34 umlaufend bewegten Zahnkranzelementen 35 bewirkt. Dadurch kann der Hubboden 6 bei der Hubbewegung nicht in durch Seilbewegung verursachte Schwingungen geraten. Dieses ist auch ein Vorteil des in Fig. 8 dargestellten Ausführungsbeispiels der Erfindung, bei dem der Hubboden 6 mit Hilfe von an seinen Seiten angeordneten Gewindeelementen 36 sowie durch einen Motor 33 umlaufend antreibbaren Gewindestangen 37 gehoben oder gesenkt wird. Zur Erhöhung der Stabilität können diese Gewindestangen 37 auch an Tragsäulen 7 drehbar gelagert sein. Die Kraftübertragung des Motors 33 auf die Gewindestangen 37 erfolgt mit Hilfe von in diesem Beispiel an den unteren Enden der Gewindestangen 37 umlaufenden Kettenelementen 38, welche in Zahnkranzelemente 39 am Fuß der Gewindestangen 37 eingreifen.

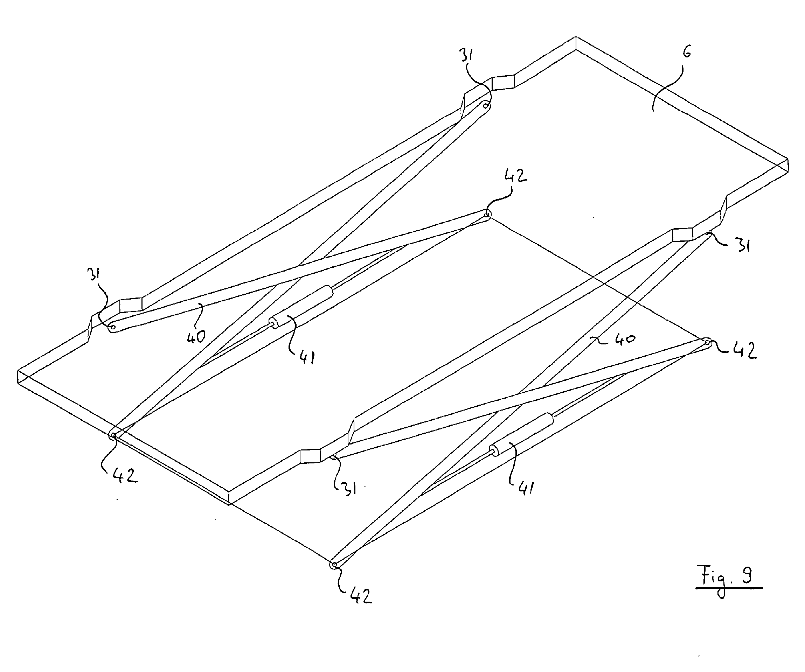

Der in Fig. 9 dargestellte Hubboden 6 nach der Erfindung wird durch zwei Hubscheren 40 höhenverstellt. Die Scherenbewegung wird hierbei jeweils durch einen Hubzylinder 41 bewirkt, der an den einzelnen Elementen der Hubschere angeordnet ist. Bei diesem Ausführungsbeispiel können sowohl die Traggerüstbefestigungen 31 als auch die im Bodenbereich des unteren Ladebereiches 3 befindlichen Befestigungen 42 längsverschiebbar ausgebildet sein, um somit die Scherenbewegung zu ermöglichen.

## Patentansprüche

1. Hubbodenvorrichtung für einen Laderaum (2) eines Fahrzeuges mit einer Trageinheit und einem an der Trageinheit angeordneten, höhenverstellbaren Hubboden (6), welcher ein Traggerüst aufweist und den Laderaum (2) in zumindest teilweise übereinander befindliche Ladebereiche (3, 4) unterteilt, **dadurch gekennzeichnet, daß** das Traggerüst aus variabel miteinander verbindbaren Tragelementen (16) modular aufgebaut ist.

2. Hubbodenvorrichtung nach Anspruch 1, **dadurch gekennzeichnet, daß** die eine definierte Tragkraft aufweisenden Tragelemente (16) als Bausatzelemente dergestalt ausgebildet sind, daß die Gesamttraglast und/oder die Geometrie des Traggerüstes durch eine Kombination der Tragelemente (16) variierbar ist.

3. Hubbodenvorrichtung nach Anspruch 1 oder 2, **dadurch gekennzeichnet, daß** zumindest ein Tragelement (16) eine Mehrzahl von Befestigungsbereichen zur fakultativen Aufnahme von weiteren Tragelementen (16) aufweist.

4. Hubbodenvorrichtung nach einem der Ansprüche 1 bis 3, **dadurch gekennzeichnet, daß** zumindest ein Tragelement (16) als Längsträger ausgebildet ist.

5. Hubbodenvorrichtung nach Anspruch 4, **dadurch gekennzeichnet, daß** der Längsträger als ein zentraler Längsträger (17) mit sich an zwei Seiten über in etwa die gesamte Länge des Längsträgers erstreckenden, aneinander angeordneten Befestigungsbereichen ausgebildet ist, wobei der Längsträger durch Ablängen längenvariierbar ist.

6. Hubbodenvorrichtung nach Anspruch 4, **dadurch gekennzeichnet, daß** ein Längsträger als Rahmenteil (23) mit sich an zumindest einer Seite über in etwa die gesamte Länge des Längsträgers erstreckenden, aneinander angeordneten Befestigungsbereichen ausgebildet ist.

7. Hubbodenvorrichtung nach einem der Ansprüche 1 bis 6, **dadurch gekennzeichnet, daß** zumindest ein Tragelement (16) als Querträger ausgebildet ist.

8. Hubbodenvorrichtung nach Anspruch 7, **dadurch gekennzeichnet, daß** ein Querträger zumindest endseitige Befestigungsbereiche zur Befestigung an einem weiteren Tragelement (16) aufweist.

9. Hubbodenvorrichtung nach einem der Ansprüche 4 bis 6 und Anspruch 7, **dadurch gekennzeichnet, daß** ein Querträger als ein zumindest einen Längsträger in seiner Längserstreckung begrenzendes Kopfteil (18) ausgebildet ist, welches Befestigungsbereiche für Tragaufnahmen und Umlenkrollen (11) oder dergleichen Seiloder Kettenführungselemente der Trageinheit aufweist.

10. Hubbodenvorrichtung nach Anspruch 5 und Anspruch 7, **dadurch gekennzeichnet, daß** ein Querträger als ein an dem zentralen Längsträger (17) befestigbares Seitenteil (22) ausgebildet ist, welches Befestigungsbereiche für Tragaufnahmen und Umlenkrollen (11) oder dergleichen Seil- oder Kettenführungselemente aufweist.

11. Hubbodenvorrichtung nach einem der Ansprüche 1 bis 10, **dadurch gekennzeichnet, daß** ein durch Ablängen längenveränderliches Rahmenteil (23) endseitig an einem Querträger (21) und/oder zwischen Kopfteilen (18) und/oder zwischen Kopfteilen (18) und Seitenteilen (22) befestigbar ist.

12. Hubbodenvorrichtung nach einem der Ansprüche 1 bis 11, **dadurch gekennzeichnet, daß** zumindest ein Tragelement (16) hohl ausgebildet ist.

13. Hubbodenvorrichtung nach einem der Ansprüche 1 bis 12, **dadurch gekennzeichnet, daß** wenigstens ein Tragelement (16) zumindest teilweise einen Bodenbereich des Hubbodens (6) ausbildet.

14. Hubbodenvorrichtung nach einem der Ansprüche 1 bis 13, **dadurch gekennzeichnet, daß** zumindest ein Teil eines Bodenbereiches des Hubbodens (6) eine rutschvermindernde Oberfläche aufweist.

15. Hubbodenvorrichtung nach einem der Ansprüche 1 bis 14, **dadurch gekennzeichnet, daß** die Tragelemente (16) zumindest teilweise Strangpreßprofile einer Aluminiumlegierung sind.

16. Hubbodenvorrichtung nach einem der Ansprüche 1 bis 15, **gekennzeichnet durch** eine Antriebseinheit zur Durchführung einer Hubbewegung des Hubbodens (6).

17. Hubbodenvorrichtung nach Anspruch 16, **dadurch gekennzeichnet, daß** die Antriebeinheit einen Energiespeicher aufweist und durch diesen autark betreibbar ist.

18. Hubbodenvorrichtung nach Anspruch 17, **dadurch gekennzeichnet, daß** der Energiespeicher an dem Hubboden (6) angeordnet ist.

19. Hubbodenvorrichtung nach einem der Ansprüche 16 bis 18, **dadurch gekennzeichnet, daß** die Antriebseinheit einen Motor (33) aufweist.

20. Hubbodenvorrichtung nach einem der Ansprüche 16 bis 19, **dadurch gekennzeichnet, daß** zumindest ein Teil der Antriebseinheit am Hubboden (6) angeordnet ist.

21. Hubbodenvorrichtung nach Anspruch 20, **dadurch gekennzeichnet, daß** das Teil der Antriebseinheit in zumindest einem Tragelement (16) integriert ist.

22. Hubbodenvorrichtung nach einem der Ansprüche 16 bis 21, **dadurch gekennzeichnet, daß** die Antriebseinheit einen Hubzylinder (24) aufweist.

23. Hubbodenvorrichtung nach Anspruch 21 und 22, **dadurch gekennzeichnet, daß** der Hubzylinder (24) in zumindest einem Tragelement (16) angeordnet ist und an diesem ein in dem Tragelement (16) geführter Seilführungsschlitten (27) zur gleichmäßigen Belastung des Hubzylinders (24) festgelegt ist.

24. Hubbodenvorrichtung nach Anspruch 22, **dadurch gekennzeichnet, daß** der Hubzylinder (24) im Bodenbereich des unteren Ladebereiches (3) angeordnet ist.

25. Hubbodenvorrichtung nach einem der Ansprüche 16 bis 24, **dadurch gekennzeichnet, daß** die Trageinheit zumindest ein Tragteil (29) aufweist, welches eine Traggerüstbefestigung (31) und eine Trageinheitsbefestigung (28) miteinander verbindet, und die Antriebseinheit die Höhenverstellung des Hubbodens (6) durch Variierung der durch das Tragteil (29) zwischen den Befestigungen definierten Weglänge bewirkt.

26. Hubbodenvorrichtung nach Anspruch 25 **dadurch gekennzeichnet, daß** das Tragteil (29) ein Seil, eine Kette oder dergleichen Zugkräfte übertragendes Element ist.

27. Hubbodenvorrichtung nach Anspruch 25 **dadurch gekennzeichnet, daß** das Tragteil (29) ein Hubzylinder ist.

28. Hubbodenvorrichtung nach einem der Ansprüche 1 bis 27 **dadurch gekennzeichnet, daß** die Trageinheit zumindest zwei im wesentlichen vertikal an den Seiten des Laderaumes (2) angeordnete Tragsäulen (7) zur Aufnahme und Weiterleitung der Gewichtskräfte des Hubbodens (6) in das Chassis aufweist.

29. Hubbodenvorrichtung nach Anspruch 28 und einem der Ansprüche 16 bis 24, **dadurch gekennzeichnet, daß** die Tragsäulen (7) als Zahnstangen ausgebildet sind, an denen entlang der Hubboden (6) mithilfe von an den Seiten des Hubbodens (6) angeordneten, durch die Antriebseinheit umlaufend antreibbaren Zahnkranzelementen (35) bewegbar ist.

30. Hubbodenvorrichtung nach einem der Ansprüche 16 bis 24 und Anspruch 28, **dadurch gekennzeichnet, daß** die Trageinheit zumindest zwei in etwa vertikal an den Seiten des Laderaums (2) angeordnete, durch die Antriebseinheit umlaufend antreibbare Gewindestangen (37) aufweist, die an den Tragsäulen (7) drehbar befestigt sind und an denen entlang der Hubboden (6) mit Hilfe von an den Seiten des Hubbodens (6) angeordneten Gewindeelementen (36) bewegbar ist.

31. Hubbodenvorrichtung nach einem der Ansprüche 1 bis 24, **dadurch gekennzeichnet, daß** die Trageinheit zumindest eine Hubschere (40) aufweist.

32. Hubbodenvorrichtung nach einem der Ansprüche 28 bis 30, **gekennzeichnet durch** zumindest ein Mittel (12) zur Arretierung des Hubbodens an den Tragsäulen (7).

33. Hubbodenvorrichtung nach Anspruch 32, **dadurch gekennzeichnet, daß** das Mittel (12) zur Arretierung an einem Querträger angebracht ist.
